# EUROPEAN PATENT APPLICATION

(11) **EP 1 327 529 A2**
(43) Date of publication of application: **16.07.2003**
(21) Application number: 02080299.7
(22) Date of filing: 16.12.2002
(51) Int. Cl.: B41M 5/40, C08J 5/18, C08L 101/00

(54) **Improved voided articles**

(30) Priority: 27.12.2001 US 33457
(71) Applicant: EASTMAN KODAK COMPANY, Rochester, New York 14650 (US)
(72) Inventor: Smith, Dennis Edward, c/o Eastman Kodak Company, Rochester, New York 14650-2201 (US); Kung, Teh-Ming, c/o Eastman Kodak Company, Rochester, New York 14650-2201 (US); Laney, Thomas Miles, c/o Eastman Kodak Company, Rochester, New York 14650-2201 (US); Muehlbauer, John L., c/o Eastman Kodak Company, Rochester, New York 14650-2201 (US)
(74) Representative: Weber, Etienne Nicolas

(57) **Abstract**

Disclosed is a shaped article comprising a continuous first polymer phase having dispersed therein microbeads of a cross-linked second polymer, which microbeads are bordered by void space, wherein the monomers from which the second polymer is derived are selected to provide microbeads that are both low-yellowing and thermally stable.

## Description

The present invention relates to shaped articles having an oriented first polymer continuous phase and microbeads of a second polymer dispersed therein which are at least partially bordered by voids, wherein the monomers from which the second polymer are derived are selected to provide microbeads that are both low-yellowing and thermally stable.

Blends of linear polyesters with other incompatible materials of organic or inorganic nature to form microvoided structures are well-known in the art. U.S. Patent No. 3,154,461 discloses, for example, linear polyesters blended with, for example, calcium carbonate. U.S. Patent No. 3,944,699 discloses blends of linear polyesters with 3 to 27% of organic material such as ethylene or propylene polymer. U.S. Patent No. 3,640,944 also discloses the use of poly(ethylene terephthalate) blended with 8% organic material such as polysulfone or poly(4-methyl-1-pentene). U.S. Patent No. 4,377,616 discloses a blend of polypropylene to serve as the matrix with a small percentage of another incompatible organic material, nylon to initiate microvoiding in the polypropylene matrix. U.K. Patent Specification 1,563,591 discloses linear polyester polymers for making opaque thermoplastic film support in which has been blended finely divided particles of barium sulfate together with a void-promoting polyolefin, such as polyethylene, polypropylene or poly-4-methyl-1-pentene.

The above-mentioned patents show that it is known to use incompatible blends to form films having paper-like characteristics after such blends have been extruded into films and the films have been quenched, biaxially oriented and heat set. The minor component of the blend, due to its incompatibility with the major component of the blend, upon melt extrusion into film forms generally spherical particles each of which initiates a microvoid in the resulting matrix formed by the major component. The melting points of the void initiating particles, in the use of organic materials, should be above the glass transition temperature of the major component of the blend and particularly at the temperature of biaxial orientation.

As indicated in U.S. Patent No. 4,377,616, spherical particles initiate voids of unusual regularity and orientation in a stratified relationship throughout the matrix material after biaxial orientation of the extruded film. Each void tends to be of like shape, not necessarily of like size since the size depends upon the size of the particle. The voids generally tend to be closed cells, and thus there is virtually no path open from one side of a biaxially oriented film to the other side through which liquid or gas can traverse. The term "void" is used herein to mean devoid of solid matter, although it is likely the "voids" contain a gas.

Upon biaxial orientation of the resulting extruded film, the film becomes white and opaque, the opacity resulting from light being scattered from the walls of the microvoids. The transmission of light through the film becomes lessened with increased number and with increased size of the microvoids relative to the size of a particle within each microvoid.

U.S. Patent No. 3,944,699 also indicates that the extrusion, quenching and stretching of the film may be effected by any process which is known in the art for producing oriented film, such as by a flat film process or a bubble or tubular process. The flat film process involves extruding the blend through a slit dye and rapidly quenching the extruded web upon a chilled casting drum so that the polyester component of the film is quenched into the amorphous state. The quenched film is then biaxially oriented by stretching in mutually perpendicular directions at a temperature above the glass transition temperature of the polyester. The film may be stretched in one direction and then in a second direction or may be simultaneously stretched in both directions. After the film has been stretched it is heat set by heating to a temperature sufficient to crystallize the polyester while restraining the film against retraction in both directions of stretching.

Paper is essentially a non-woven sheet of more or less randomly arrayed fibers. The key properties of these structures are opacity, texture, strength, and stability. Natural polymers are generally weaker and less stable. A serious problem, for example, is brightness reversion or fading of papers and fibers.

Although there are many ways to produce opaque media, this invention is concerned with creating opacity by stretching or orienting plastic materials to induce microvoids which scatter light, preferably white and ultraviolet light. A large body of prior art deals with this technique, wherein a plurality of inorganic solid particles are used as the dispersed phase, around which the microvoids form. Some significant problems associated with this approach are: (1) agglomeration and particle size control, (2) abrasive wear of extrusion equipment, guides, and cutters, (3) high specific gravity of these solids, (4) poor void nucleation around the solid particles due to the low thermal contraction of solids relative to liquids and polymer wetting and adhesion to the solid surfaces, (5) cost of these materials on a volume basis, and (6) handling and processing problems in general.

Of particular interest relative to this invention are U.S. Patent No. 5,143,765 which is directed to shaped articles comprising a continuous polyester phase having dispersed therein crosslinked microbeads which are at least partially bordered by void space, and also U.S. Patent No. 5,100,862 which discloses dye-receiving elements for thermal dye transfer comprising the described support containing crosslinked microbeads.

A problem to be solved with the types of shaped articles containing crosslinked microbeads described is that the articles tend to be unsatisfactory from a yellowing or thermal stability standpoint.

The invention provides a shaped article comprising a continuous first polymer phase having dispersed therein microbeads of a cross-linked second polymer, which microbeads are bordered by void space, wherein the monomers from which the second polymer is derived are selected to provide microbeads that are both low-yellowing and thermally stable. The invention also provides a method of making such an article.

The article contains microbeads that exhibit improved resistance to yellowing while maintaining thermal stability.

The shaped articles of the invention, as generally described above, exhibit certain desirable properties. These properties include desirable texture, opacity, low density, whiteness, and stability. The articles are especially useful when in the form of film or sheet material (e.g., as a paper substitute) or when in the form of a biaxially oriented bottle (beverage container) or tube (food container). During melt processing the orientable polymer does not react chemically or physically with the microbead polymer and/or its coating in such a way as to cause one or more of the following to occur to a significant or unacceptable degree: (a) alteration of the crystallization kinetics of the matrix polymer making it difficult to orient, (b) destruction of the matrix polymer, (c) destruction of the microbeads, (d) adhesion of the microbeads to the matrix polymer, or (e) generation of undesirable reaction products, such as toxic or high-color moieties.

The present invention provides shaped articles comprising polymeric microbeads, which are low-yellowing under exposure to UV light and thermally stable. By low-yellowing, it is meant the change of b* value toward yellowness in the CIELAB color space (Δb*) is not more than 0.2.

By thermally stable, it is meant that the temperature at which the microbeads experience a 2 % weight loss is at least 20 °C above the crystalline peak melting point of the continuous first polymer phase as defined in ASTM D3418. For the polyester employed in the following examples, that would be 20 °C above the 250 °C crystalline peak melting point or 270 °C.

The present invention suitably provides shaped articles comprising a continuous thermoplastic polymer phase having dispersed therein microbeads of polymer which are at least partially bordered by microvoids, the microbeads of polymer suitably having a size of about 0.1-50 micrometers, typically about 0.2-30 micrometers, and usually about 0.5 to 5 micrometers, being present in an amount of about 5-50% by weight based on the weight of continuous phase polymer. The microvoids typically occupy about 2-60% by volume of the shaped article and typically measure from 0.6 to 150µm in machine and cross-machine direction with a height of 0.2 to 30 µm and, more commonly, 1.5-25 µm in machine and cross-machine direction with a height of 0.5 to 5.0 µm. The composition of the shaped article when consisting only of the polymer continuous phase and microbeads bordered by voids, is characterized by having a specific gravity of less than 1.20, typically about 0.3-1.0; by a Kubelka-Munk R value (infinite thickness) of about 0.90 to about 1.0, and typically the following Kubelka-Munk values when formed into a 3 mil thick film:
Opacity--about 0.78 to about 1.0
SX--25 or less
KX--about 0.001 to 0.2
Ti--about 0.02 to 1.0
where the opacity values indicate that the article is opaque, the SX values indicate a large amount of light scattering through the thickness of the articles, the KX values indicate a low amount of light absorption through the thickness of the article, and the Ti values indicate a low level amount of internal transmittance of the thickness of the article. The R (infinite thickness) values indicate a large amount of light reflectance. Obviously, the Kubelka-Munk values, which are dependent on thickness of the article must be specified at a certain thickness. Although the shaped articles themselves may be very thin, e.g., less than 1 mil or they may be thicker, e.g., 20 mils, the Kubelka-Munk values, except for R infinity, are specified at 3 mils and in the absence of any additives which would effect optical properties. Thus, to determine whether shaped articles have the optical properties called for, the polyester containing microbeads at least partially bordered by voids, without additives, should be formed in a 3 mils thick film for determination of Kubelka-Munk values. The shaped articles according to this invention are useful, for example, when in any commercial form such as, for example, sheet, film, annulus, bottle, ribbon, fiber or rod, and wire coatings. In the absence of additives or colorants, they are very white, have a very pleasant feel or hand and are receptive to ink, especially the polyester matrices, from writing instruments, especially conventional ball point pens. The shaped articles are very resistant to wear, moisture, oil, and tearing.

The shaped article is suitably in the form of a paper-like sheet having a thickness of about 0.10-20 mils in thickness. The shaped article may also be an oriented bottle made by injection blow molding, or may be in the form of a fiber or rod. Preferably, the article is made by biaxial orientation using procedures well known in the art. The products made in accordance with this invention are very durable. For example, when made into biaxially oriented films, the resultant synthetic papers are strong, ultra-white, highly-opaque, and long-lasting. Such papers are suitable for "archival" records and will retain their properties for very long periods of time, even when compared to the so-called "archival quality" papers of today. The products of this invention are environmentally desirable products.

The continuous first polymer phase polymer may be any thermoplastic polymer capable of being cast into a film or sheet and then oriented, spun into fibers, extruded into rods or extrusion, blow-molded into containers such as bottles, etc. Suitable classes of thermoplastic polymers include polyesters, polyolefins, polyamides, polycarbonates, cellulosic esters, polystyrene, polyvinyl resins, polysulfonamides, polyethers, polyimides, polyvinylidene fluoride, polyurethanes, polyphenylenesulfides, polytetrafluoroethylene, polyacetals, and polysulfonates. Copolymers and/or mixtures of these polymers can also be used. Suitable polyesters include those produced from aromatic, aliphatic or cycloaliphatic dicarboxylic acids of 4-20 carbon atoms and aliphatic or alicyclic glycols having from 2-24 carbon atoms. Examples of suitable dicarboxylic acids include terephthalic, isophthalic, phthalic, naphthalene dicarboxylic acid, succinic, glutaric, adipic, azelaic, sebacic, fumaric, maleic, itaconic, 1,4-cyclohexanedicarboxylic, sodiosulfoisophthalic and mixtures thereof. Examples of suitable glycols include ethylene glycol, propylene glycol, butanediol, pentanediol, hexanediol, 1,4-cyclohexanedimethanol, diethylene glycol, other polyethylene glycols and mixtures thereof. Such polyesters are well known in the art and may be produced by well-known techniques, e.g., those described in U.S. Patent Nos. 2,465,319 and 2,901,466. Preferred continuous matrix polyesters are those having repeat units from terephthalic acid or naphthalene dicarboxylic acid and at least one glycol selected from ethylene glycol, 1,4-butanediol and 1,4-cyclohexanedimethanol. Poly(ethyleneterephthalate), which may be modified by small amounts of other monomers, is especially preferred. Other suitable polyesters include liquid crystal copolyesters formed by the inclusion of a suitable amount of a co-acid component such as stilbene dicarboxylic acid. Examples of such liquid crystal copolyesters are those disclosed in U.S. Patent Nos. 4,420,607, 4,459,402 and 4,468,510. Suitable polyolefins include polyethylene, polypropylene, polymethylpentene, and mixtures thereof. Polyolefin copolymers, including copolymers of ethylene and propylene are also useful. Useful polyamides are nylon 6, nylon 66, and mixtures thereof. Copolymers of polyamides are also suitable continuous phase polymers. An example of a useful polycarbonates is bisphenol A polycarbonate. Cellulosic esters suitable for use as the continuous phase polymer are cellulose nitrate, cellulose triacetate, cellulose diacetate, cellulose acetate propionate, cellulose acetate butyrate, and mixtures or copolymers thereof. Useful polyvinyl resins include polyvinyl chloridepoly(vinyl acetal), and mixtures thereof. Copolymers of vinyl resins can also be utilized.

Suitable cross-linked second polymers useful for the microbeads are those that provide both improved yellowing and thermal stability. Suitably, they are selected to be low in styrenic monomers or even to be essentially free of styrenic monomers. Examples include members selected from the group consisting of acrylate-type monomers such as those of the formula

CH₂=C(R')C(O)(OR)

wherein R is a substituent group such as one selected from the group consisting of hydrogen and an alkyl group containing typically from about 1 to 12 carbon atoms and R' is selected from the group consisting of hydrogen and methyl; copolymers of vinyl chloride and vinylidene chloride, vinyl bromide, vinyl esters having the formula

CH₂=CH(O)COR

wherein R is an alkyl group such as one containing from 2 to 18 carbon atoms, acrylic acid, methacrylic acid, itaconic acid, citraconic acid, maleic acid, fumaric acid, oleic acid, and vinylbenzoic acid groups.

Examples of typical monomers are acrylic acid or methacrylic acid and their alkyl esters such as methyl methacrylate, ethyl methacrylate, butyl methacrylate, methyl acrylate, ethyl acrylate, hexyl acrylate, n-octyl acrylate, lauryl methacrylate, 2-ethylhexyl methacrylate, nonyl acrylate, benzyl methacrylate; the hydroxyalkyl esters of the same acids, such as, 2-hydroxyethyl acrylate, 2-hydroxyethyl methacrylate, and 2-hydroxypropyl methacrylate; the nitriles and amides of the same acids, such as, acrylonitrile, methacrylonitrile, acrylamide, t-butylacrylamide and methacrylamide; vinyl compounds, such as, vinyl acetate, vinyl propionate, vinylpyridine, and vinylimidazole; dialkyl esters, such as, dialkyl maleates, dialkyl itaconates, and dialkyl methylene-malonates. Typical cross-linking agents are 1,4 butanediol diacrylate, 1,4 butanediol dimethacrylate, 1,3 butylene glycol diacrylate, 1,3 butylene glycol dimethacrylate, cyclohexane dimethanol diacrylate, cyclohexane dimethanol dimethacrylate, diethylene glycol diacrylate, diethylene glycol dimethacrylate, dipropylene glycol diacrylate, dipropylene glycol dimethacrylate, ethylene glycol diacrylate, ethylene glycol dimethacrylate, 1,6 hexanediol diacrylate, 1,6 hexanediol dimethacrylate. neopentyl glycol diacrylate, neopentyl glycol dimethacrylate, tetraethylene glycol diacrylate, tetraethylene glycol dimethacrylate, triethylene glycol diacrylate, triethylene glycol dimethacrylate, tripropylene glycol diacrylate, tripropylene glycol dimacrylate, pentaerythritol triacrylate, trimethylolpropane triacrylate, trimethylolpropane trimethacrylate, dipentaerythritol pentaacrylate, ditrimethylolpropane tetraacrylate, pentaerythritol tetraacrylate, allyl methacrylate, allyl acrylate, diallylphthalate, diallyl maleate, dienes such as butadiene and isoprene and mixtures thereof.

By substantially free of styrenic monomers it is meant that the microbeads are synthesized without using either a styrenic linear monomer or a styrenic crosslinking monomer. Styrenic monomer means any vinyl aromatic compounds, whether substituted or not, such as styrene, t-butyl styrene, ethylvinylbenzene, chloromethylstyrene, vinyl toluene, styrene sulfonylchloride, and divinylbenzene.

Desirably, the beads contain no more than 15 wt % styrenic monomer and preferably no more than 10 wt % or even 1 wt %.

Processes well known in the art yield non-uniformly sized particles, characterized by broad particle size distributions. The resulting beads can be classified by screening to produce beads spanning the range of the original distribution of sizes. Other processes such as suspension polymerization, limited coalescence, directly yield very uniformly sized particles. Optionally, suitable slip agents or lubricants including colloidal silica, colloidal alumina, and metal oxides such as tin oxide and aluminum oxide can be on the microbead surface. The preferred slip agents are colloidal silica and alumina, most preferably, silica. The cross-linked microbeads may be prepared by procedures well known in the art. For example, conventional suspension polymerization or emulsion polymerization processes. It is preferred to use the "limited coalescence" technique for producing the cross-linked polymer microbeads. This process is described in detail in U.S. Patent Nos. 3,615,972 and 5,378,577. Preparation of the microbeads for use in the present invention does not utilize a blowing agent as described in U.S. Patent No. 3,615,972, however. The following general procedure may be utilized in a limited coalescence technique.
1. The polymerizable liquid is dispersed within an aqueous nonsolvent liquid medium to form a dispersion of droplets having sizes not larger than the size desired for the polymer microbeads, whereupon
2. The dispersion is allowed to rest and to reside with only mild or no agitation for a time during which a limited coalescence of the dispersed droplets takes place with the formation of a lesser number of larger droplets, such coalescence being limited due to the composition of the suspending medium, the size of the dispersed droplets thereby becoming remarkably uniform and of a desired magnitude, and
3. The uniform droplet dispersion is then optionally stabilized by addition of thickening agents to the aqueous suspending medium, whereby the uniform-sized dispersed droplets are further protected against coalescence and are also retarded from concentrating in the dispersion due to difference in density of the disperse phase and continuous phase, and
4. The polymerizable liquid or oil phase in such stabilized dispersion is subjected to polymerization conditions and polymerized, whereby globules of polymer are obtained having spheroidal shape and remarkably uniform and desired size, which size is predetermined principally by the composition of the initial aqueous liquid suspending medium. The diameter of the droplets of polymerizable liquid, and hence the diameter of the beads of polymer, can be varied predictably, by deliberate variation of the composition of the aqueous liquid dispersion, within the range of from about one-half of a micrometer or less to about 0.5 centimeter. For any specific operation, the range of diameters of the droplets of liquid, and hence of polymer beads, has a factor in the order of three or less as contrasted to factors of 10 or more for diameters of droplets and beads prepared by usual suspension polymerization methods employing critical agitation procedures. Since the bead size, e.g., diameter, in the present method is determined principally by the composition of the aqueous dispersion, the mechanical conditions, such as the degree of agitation, the size and design of the apparatus used, and the scale of operation, are not highly critical. Furthermore, by employing the same composition, the operations can be repeated, or the scale of operations can be changed, and substantially the same results can be obtained.

The microbeads referred to herein can optionally have a coating of a "slip agent" such as silica. By this term it is meant that the friction at the surface of the microbeads is greatly reduced. Slip agent may be formed on the surface of the microbeads during their formation by including it in the suspension polymerization mix. Microbead size may be regulated, for example, by the ratio of silica to monomer. Typically, the microbeads of cross-linked polymer range in size from about, 0.1-50 micrometers, and are present in an amount of about 5-50% by weight based on the weight of the polyester.

The microbeads of cross-linked polymer are at least partially bordered by voids. The void space in the shaped article should occupy about 2-60%, preferably about 30-50%, by volume of the shaped article. Depending on the manner in which the shaped articles are made, the voids may completely encircle the microbeads, e.g., avoid may be in the shape of a doughnut (or flattened doughnut) encircling a microbead, or the voids may only partially border the microbeads, e.g., a pair of voids may border a microbead on opposite sides.

The invention does not require but permits the use or addition of a plurality of organic and inorganic materials such as fillers, pigments, anti-blocks, anti-stats, plasticizers, dyes, stabilizers, nucleating agents, optical brighteners, etc. These materials may be incorporated into the matrix phases, into the dispersed phases, or may exist as separate dispersed phases. During stretching the voids assume characteristic shapes from the balanced biaxial orientation of paper-like films to the uniaxial orientation of microvoided/satin-like fibers. Balanced microvoids are largely circular in the plane of orientation while fiber microvoids are elongated in the direction of the fiber axis. The size of the microvoids and the ultimate physical properties depend upon the degree and balance of the orientation, temperature and rate of stretching, crystallization kinetics, the size distribution of the microbeads, and the like.

The shaped articles according to this invention may be prepared by
(a) forming a mixture of molten continuous matrix polymer and cross-linked polymer wherein the cross-linked polymer is a multiplicity of microbeads uniformly dispersed throughout the matrix polymer, the matrix polymer being as described hereinbefore, the cross-linked polymer microbeads being as described hereinbefore,
(b) forming a shaped article from the mixture such as by extrusion, casting or molding,
(c) orienting the article such as by stretching to form microbeads of cross-linked polymer uniformly distributed throughout the article and voids at least partially bordering the microbeads on sides thereof in the direction, or directions of orientation.

The mixture may be formed by forming a melt of the matrix polymer and mixing therein the cross-linked polymer. The cross-linked polymer may be in the form of solid or semi-solid microbeads. Due to the incompatibility between the matrix polymer and crosslinked polymer, there is no attraction or adhesion between them, and they become uniformly dispersed in the matrix polymer upon mixing.

When the microbeads have become uniformly dispersed in the matrix polymer, a shaped article is formed by processes such as extrusion, casting or molding. Examples of extrusion or casting would be extruding or casting a film or sheet, and an example of molding would be injection or reheat blow-molding a bottle. Such forming methods are well known in the art. If sheets or film material are cast or extruded, it is important that such article be oriented by stretching, at least in one direction. Methods of unilaterally or bilaterally orienting sheet or film material are well known in the art. Basically, such methods comprise stretching the sheet or film at least in the machine or longitudinal direction after it is cast or extruded an amount of about 1.5-10 times its original dimension. Such sheet or film may also be stretched in the transverse or cross-machine direction by apparatus and methods well known in the art, in amounts of generally 1.5-10 (usually 3-4 for polyesters and 6-10 for polypropylene) times the original dimension. Such apparatus and methods are well known in the art and are described in U.S. Patent No. 3,903,234.

If the shaped article is in the form of a bottle, orientation is generally biaxial as the bottle is stretched in all directions as it is blow-molded. Such formation of bottles is also well known in the art. See, for example, U.S. Patent No. 3,849,530.

The voids, or void spaces, referred to herein surrounding the microbeads are formed as the continuous matrix polymer is stretched at a temperature above the Tg of the matrix polymer. The microbeads of cross-linked polymer are relatively hard compared to the continuous matrix polymer. Also, due to the incompatibility and immiscibility between the microbead and the matrix polymer, the continuous matrix polymer slides over the microbeads as it is stretched, causing voids to be formed at the sides in the direction or directions of stretch, which voids elongate as the matrix polymer continues to be stretched. Thus, the final size and shape of the voids depends on the direction(s) and amount of stretching. If stretching is only in one direction, microvoids will form at the sides of the microbeads in the direction of stretching. If stretching is in two directions (bi-directional stretching), in effect such stretching has vector components extending radially from any given position to result in a doughnut-shaped void surrounding each microbead.

The preferred pre-form stretching operation simultaneously opens the microvoids and orients the matrix material. The final product properties depend on and can be controlled by stretching time-temperature relationships and on the type and degree of stretch. For maximum opacity and texture, the stretching is done just above the glass transition temperature of the matrix polymer. When stretching is done in the neighborhood of the higher glass transition temperature, both phases may stretch together and opacity decreases. In the former case, the materials are pulled apart, a mechanical anticompatibilization process. Two examples are high-speed melt spinning of fibers and melt blowing of fibers and films to form non-woven/spun-bonded products. In summary, the scope of this invention includes the complete range of forming operations just described.

In general, void formation occurs independent of, and does not require, crystalline orientation of the matrix polymer. Opaque, microvoided films have been made in accordance with the methods of this invention using completely amorphous, non-crystallizing copolyesters as the matrix phase. Crystallizable/orientable (strain hardening) matrix materials are preferred for some properties like tensile strength and barrier. On the other hand, amorphous matrix materials have special utility in other areas like tear resistance and heat sealability. The specific matrix composition can be tailored to meet many product needs. The complete range from crystalline to amorphous matrix polymer is part of the invention.

Other ingredients are often added such as surfactants, emulsifiers, pigments, and the like during the preparation of such microbeads. Due to the nature of these additives, they tend to remain on the surfaces of the microbeads. In other words, they tend to accumulate at the interface between the polymer and the immiscible medium in which the suspension polymerization is carried out. However, due to the nature of such processes, some of these materials can remain within the core of the beads and some in the immiscible medium. For example, processing and formulating may be done to entrap ingredients within the beads. In other cases, the goal may be to concentrate ingredients on the surface of the beads.

The dye image-receiving layer of the receiving elements of the invention may comprise, for example, a polycarbonate, a polyurethane, a polyester, polyvinyl chloride, polystyrene-co-acrylonitrile), poly(caprolactone) or mixtures thereof. The dye image-receiving layer may be present in any amount, which is effective for the intended purpose. In general, good results have been obtained at a concentration of from about 1 to about 5 g/m². In a preferred embodiment of the invention, the dye image-receiving layer is a polycarbonate. The term "polycarbonate" as used herein means a polyester of carbonic acid and a glycol or a dihydric phenol. Examples of such glycols or dihydric phenols are p-xylylene glycol, 2,2-bis(4-oxyphenyl)propane, bis(4-oxyphenyl)methane, 1,1-bis(4-oxyphenyl)ethane, 1,1-bis(oxyphenyl)butane, 1,1-bis(oxyphenyl)cyclohexane, and 2,2-bis(oxyphenyl)butane. In a particularly preferred embodiment, a bisphenol-A polycarbonate having a number average molecular weight of at least about 25,000 is used. Examples of preferred polycarbonates include General Electric LEXAN® Polycarbonate Resin and Bayer AG MACROLON 5700®.

A dye-donor element that is used with the thermal dye-receiving element of the invention comprises a support having theron a dye containing layer. Any dye can be used in the dye-donor employed in the invention provided it is transferable to the dye-receiving layer by the action of heat. Especially good results have been obtained with sublimable dyes such as anthraquinone dyes, e.g., Sumikalon Violet RS® (product of Sumitomo Chemical Co., Ltd.), Dianix Fast Violet 3RFS® (product of Mitsubishi Chemical Industries, Ltd.), and Kayalon Polyol Brilliant Blue N-BGM® and KST Black 146® (products of Nippon Kayaku Co., Ltd.); azo dyes such as Kayalon Polyol Brilliant Blue BM®, Kayalon Polyol Dark Blue 2BM®, and KST Black KR® (products of Nippon Kayaku Co., Ltd.), Sumickaron Diazo Black 5G® (product of Sumitomo Chemical Co., Ltd.), and Miktazol Black 5GH® (product of Mitsui Toatsu Chemicals, Inc.); direct dyes such as Direct Dark Green B® (product of Mitsubishi Chemical Industries, Ltd.) and Direct Brown M® and Direct Fast Black D® (products of Nippon Kayaku Co. Ltd.); acid dyes such as Kayanol Milling Cyanine 5R® (product of Nippon Kayaku Co. Ltd.); basic dyes such as Sumicacryl Blue 6G® (product of Sumitomo Chemical Co., Ltd.), and Aizen Malachite Green® (product of Hodogaya Chemical Co., Ltd.);

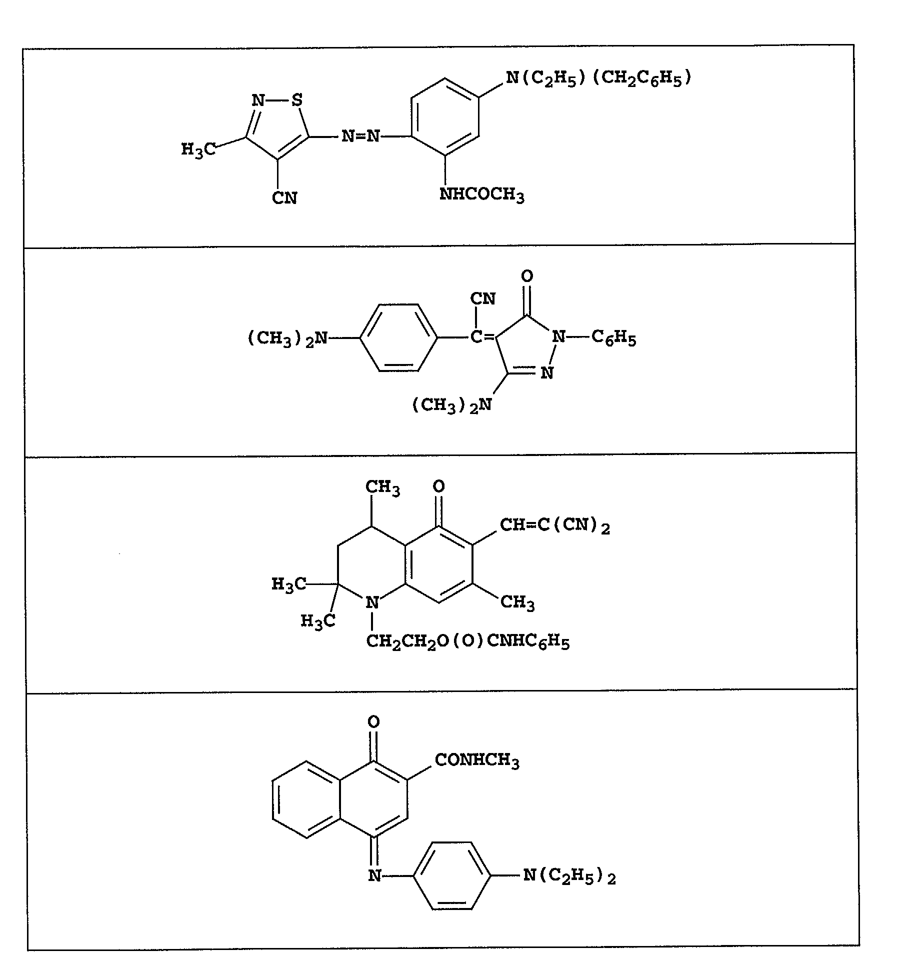

or any of the dyes disclosed in U.S. Patent No. 4,541,830. The above dyes maybe employed singly or in combination to obtain a monochrome. The dyes may be used at a coverage of from about 0.05 to about 1 g/m2 and are preferably hydrophobic.

The dye in the dye-donor element is dispersed in a polymeric binder such as a cellulose derivative, e.g., cellulose acetate hydrogenphthalate, cellulose acetate, cellulose acetate propionate, cellulose acetate butyrate, cellulose triacetate; a polycarbonate; poly(styrene-co-acrylonitrile), a poly(sulfone) or a poly(phenylene oxide). The binder may be used at a coverage of from about 0.1 to about 5 g/m2.

The dye layer of the dye-donor element may be coated on the support or printed thereon by a printing technique such as a gravure process. The reverse side of the dye-donor element can be coated with a slipping layer to prevent the printing head from sticking to the dye-donor element. Such a slipping layer would comprise a lubricating material such as a surface active agent, a liquid lubricant, a solid lubricant or mixtures thereof, with or without a polymeric binder. Preferred lubricating materials include oils or semi-crystalline organic solids that melt below 100 °C. such as poly(vinyl stearate), beeswax, perfluorinated alkyl ester polyethers, poly(caprolactone), carbowax or poly(ethylene glycols). Suitable polymeric binders for the slipping layer include poly(vinyl alcohol-co-butyral), poly(vinyl alcohol-co-acetal), poly(styrene), poly(vinyl acetate), cellulose acetate butyrate, cellulose acetate, or ethyl cellulose.

The amount of the lubricating material to be used in the slipping layer depends largely on the type of lubricating material, but is generally in the range of from about 0.001 to about 2 g/m². If a polymeric binder is employed, the lubricating material is present in the range of 0.1 to 50 wt %, preferably 0.5 to 40, of the polymeric binder employed.

As noted above, the dye-donor elements and receiving elements of the invention are used to form a dye transfer image. Such a process comprises imagewise-heating a dye-donor element as described above and transferring a dye image to a dye-receiving element to form the dye transfer image.

The dye-donor element may be used in sheet form or in a continuous roll or ribbon. If a continuous roll or ribbon is employed, it may have only one dye thereon or may have alternating areas of different dyes, such as sublimable cyan, magenta, yellow, black, etc., as described in U.S. Patent No. 4,541,830. Thus, one-, two- three- or four-color elements (or higher numbers also) are included within the scope of the invention.

In a preferred embodiment, the dye-donor element comprises a poly(ethylene terephthalate) support coated with sequential repeating areas of cyan, magenta and yellow dye, and the above process steps are sequentially performed for each color to obtain a three-color dye transfer image. Of course, when the process is only performed for a single color, then a monochrome dye transfer image is obtained.

Thermal printing heads which can be used to transfer dye from the dye-donor elements to the receiving elements are available commercially. There can be employed, for example, a Fujitsu Thermal Head (FTP-040MCS001), a TDK Thermal Head F415 HH7-1089 or a Rohm Thermal Head KE 2008-F3.

A thermal dye transfer assemblage of the invention comprises: a) a dye-donor element as described above, and b) a dye-receiving element as described above, the dye-receiving element being in a superposed relationship with the dye-donor element so that the dye layer of the donor element is in contact with the dye image-receiving layer of the receiving element. The above assemblage comprising these two elements may be pre-assembled as an integral unit when a monochrome image is to be obtained. This may be done by temporarily adhering the two elements together at their margins. After transfer, the dye-receiving element is then peeled apart to reveal the dye transfer image.

When a three-color image is to be obtained, the above assemblage is formed on three occasions during the time when heat is applied by the thermal printing head. After the first dye is transferred, the elements are peeled apart. A second dye-donor element (or another area of the donor element with a different dye area) is then brought in register with the dye-receiving element and the process repeated. The third color is obtained in the same manner.

### Examples

### YELLOWING TEST

The test sample containing microbeads was prepared in the following order:
(1) A base support was prepared employing a support laminated to a packaging film. The support consisted of a paper stock from a blend of Pontiac Maple 51 (Consolidated Pontiac Inc.) and Alpha Hardwood Sulfite (Weyerhauser Paper Co.). The packaging film is OPPalyte 350 K18 (Exxon-Mobil Co.). Prior to subsequent coating, the base support was subjected to a corona discharge treatment at approximately 450 joules/m² on the side laminated with packaging film.
(2) A subbing layer of Prosil 221 and Prosil 2210 (PCR Inc.) (1:1 weight ratio) both are organo-oxysilanes in an ethanol-methanol-water solvent mixture. The resultant solution (0.1 g/m²) contained approximately 1% of silane component, 1% water, and 98 % of 3A alcohol.
(3) A microbead-containing layer containing microbeads (3 g/m^2) as described in Table 1, a polyester copolymer binder of PETG 6763 (Eastman Chemicals) (7 g/m²), and Dynol 604 (Air Products) (0.03 g/m²) and Fluorad FC-431 (perfluorinated alkylsulfonamidoalkyl ester surfactant) ( 3M Co.) ( 0.01 g/m²) was coated from a solvent mixture of methylene chloride and trichloroethylene (4:1 by weight) onto the above prepared subbing layer of the base support.

The prepared test samples (∼ 4"x5") were exposed to UV simulating high intensity sunlight (50 Klux) for one week. For yellowness measurement, GRETAG SPM 100 spectrophotometer was employed to measure the b* (yellowness) value in the CIELAB color space. Δb* is the change of b* after 1 week high intensity sunlight exposure; the higher the Δb* value, the more the undesirable shift toward yellowness. Table 1 shows the materials tested and yellowing results. An acceptable level for Δb* is less than nor equal to 0.2.

### THERMAL STABILITY TEST

The weight loss measurements and thermal stability are done on a TA Instruments (New Castle, DE) model 2950 Hi-Res TGA (high resolution thermogravimetric analyzer). The sample size is 10 to 30 mg, and the samples are held in platinum weighing pans. Heating is done in a nitrogen gas atmosphere having a purge rate of 100 cc/min. The heating rate is 10 °C/min, and the temperature range is from ambient temperature (*ca* 25 °C) to 600 °C. Reported is the temperature at which 2% of the sample weight is lost. Tables 2 through 6 show the materials tested and thermal stability test results. An acceptable level for 2% loss temperature is 270°C for the polyester continuous phase first polymer used in the following examples

**TABLE 1**

| **YELLOWNESS EVALUATION** | | | | |
|---|---|---|---|---|
| Linear monomer | | Crosslink monomer | | yellowness Δb* |
| Name | amt wt% | Name | amt wt% | Target ≤0.2 |
| Styrene | 70% | Divinyl benzene | 30% | 0.634 |
| Methyl methacrylate | 70% | Divinyl benzene | 30% | 0.254 |
| Methyl methacrylate | 90% | Divinyl benzene | 10% | 0.150 |
| Methyl methacrylate | 70% | ethylene glycol dimethacrylate | 30% | -0.110 |
| Methyl methacrylate | 70% | 1,6 hexanediol dimethacrylate | 30% | -0.086 |
| Methyl acrylate | 70% | diethylene glycol dimethacrylate | 30% | 0.074 |
| Methyl methacrylate | 70% | 1,6 hexanediol diacrylate | 30% | 0.090 |
| Methyl methacrylate | 70% | ethylene diacrylate | 30% | 0.016 |
| Methyl methacrylate | 70% | diethylene glycol diacrylate | 30% | 0.008 |
| Methyl methacrylate | 70% | trimethylolpropane triacrylate | 30% | -0.072 |
| Methyl methacrylate | 70% | dipropylene glycol diacrylate | 30% | -0.114 |
| Methyl acrylate | 70% | allyl methacrylate | 30% | 0.142 |
| Methyl acrylate | 85% | allyl methacrylate | 15% | 0.158 |

The above data show that as microbeads are made increasingly from styrenic monomers, the yellowing under exposure to UV light degrades. On the other hand, when the monomers are more based on acrylic, methacrylic or allylic monomers, rather than styrenic monomers, the yellowing under exposure to UV light becomes acceptable.

**TABLE 2**

| **METHACRYLIC MONOMERS** | | | | |
|---|---|---|---|---|
| Linear monomer | | Crosslink monomer | | 2% loss temp |
| Name | amt | Name | amt | Target ≥270°C |
| | wt% | | wt% | °C |
| Methyl methacrylate | 70% | ethylene glycol dimethacrylate | 30% | 210 |
| Methyl methacrylate | 70% | 1,6 hexanediol dimethacrylate | 30% | 230 |
| None | 0% | diethylene glycol dimethacrylate | 100% | 250 |
| Methyl methacrylate | 30% | diethylene glycol dimethacrylate | 70% | 240 |
| Methyl methacrylate | 50% | diethylene glycol dimethacrylate | 50% | 220 |
| Methyl methacrylate | 70% | diethylene glycol dimethacrylate | 30% | 200 |

The above data show that when microbeads are made from the above-listed methacrylic monomers, the thermal stability is unacceptable

**TABLE 3**

| **ACRYLIC MONOMERS** | | | | |
|---|---|---|---|---|
| Linear monomer | | Crosslink monomer | | 2% loss temp |
| Name | amt | Name | amt | Target ≥270°C |
| | wt% | | wt% | |
| Methyl acrylate | 80% | 1,6 hexanediol diacrylate | 20% | 290 |
| Methyl acrylate | 80% | trimethylolpropane triacrylate | 20% | 300 |
| Methyl acrylate | 80% | dipropylene glycol diacrylate | 20% | 290 |

The above data show that when microbeads are made from the above acrylic monomers the thermal stability is acceptable

**TABLE 4**

| **COMBINATION METHACRYLIC LINEAR AND ACRYLIC CROSSLINKING MONOMERS** | | | | |
|---|---|---|---|---|
| Linear monomer | | Crosslink monomer | | 2% loss temp |
| Name | amt | Name | amt | Target ≥270°C |
| | wt% | | wt% | |
| Methyl acrylate | 70% | diethylene glycol dimethacrylate | 30% | 300 |
| Methyl methacrylate | 70% | 1,6 hexanediol diacrylate | 30% | 300 |
| Methyl methacrylate | 70% | ethylene diacrylate | 30% | 310 |
| Methyl methacrylate | 70% | trimethylolpropane triacrylate | 30% | 290 |
| Methyl methacrylate | 70% | dipropylene glycol diacrylate | 30% | 270 |
| Methyl methacrylate | 70% | diethylene glycol diacrylate | 30% | 250 |
| Methyl methacrylate | 80% | 1,6 hexanediol diacrylate | 20% | 240 |
| Methyl methacrylate | 80% | trimethylolpropane triacrylate | 20% | 240 |
| Methyl methacrylate | 80% | dipropylene glycol diacrylate | 20% | 190 |

The above data show that when microbeads are made from methacrylic linear monomers and acrylic crosslinking monomers, the thermal stability is acceptable in some cases and unacceptable in others.

**TABLE 5**

| **ALLYLIC CROSSLINKING MONOMERS** | | | | |
|---|---|---|---|---|
| Linear monomer | | Crosslink monomer | | 2% loss temp |
| Name | amt | Name | amt | Target ≥270°C |
| | wt% | | wt% | |
| Methyl methacrylate | 70% | allyl methacrylate | 30% | 200 |
| Methyl methacrylate | 70% | diallyl phthalate | 30% | plasticized |
| Methyl methacrylate | 70% | diallyl maleate | 30% | <200 |
| Methyl acrylate | 70% | allyl methacrylate | 30% | 275 |
| Methyl acrylate | 85% | allyl methacrylate | 15% | 280 |

The above data show that when the listed microbeads are made from methacrylic linear monomers and allylic crosslinking monomers, the thermal stability is unacceptable while when microbeads are made from acrylic linear monomers and allylic crosslinking monomers, the thermal stability is acceptable.

**TABLE 6**

| **AMOUNT OF CROSSLINKING MONOMERS** | | | | |
|---|---|---|---|---|
| Linear monomer | | Crosslink monomer | | 2% loss temp |
| Name | amt | Name | amt | Target ≥270°C |
| | wt% | | wt% | |
| None | 0% | diethylene glycol dimethacrylate | 100% | 250 |
| Methyl methacrylate | 30% | diethylene glycol dimethacrylate | 70% | 240 |
| Methyl methacrylate | 50% | diethylene glycol dimethacrylate | 50% | 220 |
| Methyl methacrylate | 70% | diethylene glycol dimethacrylate | 30% | 200 |
| | | | | |
| Methyl methacrylate | 80% | 1,6 hexanediol diacrylate | 20% | 240 |
| Methyl methacrylate | 70% | 1,6 hexanediol diacrylate | 30% | 300 |
| | | | | |
| Methyl methacrylate | 80% | trimethylolpropane triacrylate | 20% | 240 |
| Methyl methacrylate | 70% | trimethylolpropane triacrylate | 30% | 290 |
| | | | | |
| Methyl methacrylate | 80% | dipropylene glycol diacrylate | 20% | 190 |
| Methyl methacrylate | 70% | dipropylene glycol diacrylate | 30% | 270 |

The above data show that when microbeads are made from the listed methacrylic or acrylic crosslinking monomers, the thermal stability is increased by increasing the amount of methacrylic or acrylic crosslinking monomer.

### ARTICLE EXAMPLES

**Preparation of Microvoided Supports**

### Example 1

A Leistritz 27mm Twin Screw Compounding Extruder heated to 270 C was used to mix 1.7 µm poly(methylmethacrylate) beads cross linked 30% with divinylbenzene and a 1:1 blend of poly(ethylene terephthalate)("PET", commercially available as #7352 from Eastman Chemicals) and PETG 6763(polyester copolymer from Eastman Chemicals) . All components were metered into the compounder and one pass was sufficient for dispersion of the beads into the polyester matrix. The microbeads were added to attain a 30% by volume loading in the microbeads. The compounded material was extruded through a strand die, cooled in a water bath, and pelletized. The pellets were then dried in a desiccant dryer at 65 C for 12 hours.

Cast sheets were extruded in a cast sheet using a 2-1/2" extruder to extrude the compounded pellets. The 270 C meltstream was fed into a 7 inch film die also heated at 270 C. As the extruded sheet emerged from the die, it was cast onto a quenching roll set at 55C. The final dimensions of the continuous cast sheet was 18 cm wide and 300 um's thick. The cast sheet was then stretched at 110 C first 3.0 times in the X-direction and then 3.4 times in the Y-direction. The stretched sheet was then Heat Set at 150 C.

### Example 2

Another sample was also evaluated in which 1.7 µm poly(methylmethacrylate) beads cross linked 30% with 1,6-hexanediol diacrylate were used in place of the 1.7 micrometer poly(methylmethacrylate) beads cross linked 30% with divinylbenzene of Example 1. The same process with the same resulting physical size as in Example 1 was used.

### Example 3

Another sample was also attempted to be evaluated in which 1.7 µm poly(methylmethacrylate) beads cross linked 30% with ethyleneglycol dimethacrylate were used in place of the 1.7 micrometer poly(methylmethacrylate) beads cross linked 30% with divinylbenzene of Example 1. The same process with the same resulting physical size as in Example 1 was attempted. However,
during extrusion smoke and noxious fumes emanated from the extrudate indicating unacceptable thermal stability of the microbeads. No sample was generated.

### Preparation of Dye-receiving Elements

A thermal dye-receiving element was prepared from the above microvoided support by coating the following layers in order to the surface of the microvoided support:
a) a subbing layer containing Prosil 221 ( 0.055 g/m²) and Prosil 2210 (0.055 g/m²) (PCR Inc.) (both are organo-oxysilanes) along with LiCl (0.0033 g/m²) in an ethanol-methanol-water solvent mixture. The resultant solution (0.1133 g/m²) contained approximately 1% of silane component, 1% water and 98% of 3A alcohol.
b) A dye-receiving layer containing a random terpolymer of bisphenol A polycarbonate (50 mole %), diethylene glycol (49 mole %) and polydimethylsiloxane (1 mole %) ( 2500 MW) block units ( 0.48 g/m²), a randompolyesterterpolymerof 1,4-cyclohexyleneterephthalate,ethylene glycol, and 4,4'-bis(hydroxyethyl) bisphenol A ( 2.00 g/m²), GE Lexan 141-112 (a bisphenol A polycarbonate) (General Electric Co.) ( 0.08 g/m²), Drapex 429 polyester plasticizer (Witco Corp.) (0.08 g/m²), dioctyl sebacate (Aldrich Co.) ( 0.20 g/m²), and FLUORAD FC-431 (a perfluorinated alkylsulfonamidoalkylester surfactant)(3M Co.) ( 0.011 g/m²), and was coated from a solvent mixture of dichloromethane and trichloroethylene.

## Claims

1. A shaped article comprising a continuous first polymer phase having dispersed therein microbeads of a cross-linked second polymer, which microbeads are bordered by void space, wherein the monomers from which the second polymer is derived are selected to provide microbeads that are both low-yellowing and thermally stable.

2. The article of claim 1 wherein the monomers from which the second polymer is derived are substantially free of styrenic monomers.

3. The article of claim 1 wherein the monomers from which the second polymer is derived are selected from the group consisting of acrylic, methacrylic, and allylic monomers.

4. The article of claim 1 wherein the monomers from which the second polymer is derived are selected from the group consisting of acrylic and methacrylic monomers.

5. The article of claim 4 wherein the monomers from which the second polymer is derived comprise acrylic monomers.

6. The article of claim 5 wherein the acrylic monomers are selected from the group consisting of methyl acrylate, 1,6-hexanediol diacrylate, trimethylol propane triacrylate, and dipropylene glycol diacrylate.

7. The article of claim 1 wherein the first polymer is predominantly a polyester or polypropylene polymer.

8. The article of claim 1 wherein the article is a dye diffusion thermal transfer dye receiving sheet.

9. A shaped article comprising a continuous first polymer phase having dispersed therein microbeads of a cross-linked second polymer, which microbeads are bordered by void space, wherein the monomers from which the second polymer is derived comprise not more than 15 wt% styrenic monomer.

10. A method of forming an article of claim 1 comprising dispersing the microbeads of said second polymer in said continuous first polymer phase and thereafter stretching the article to cause the formation of voids bordering the microbeads.
